# EUROPEAN PATENT SPECIFICATION

(11) **EP 2 965 508 B1**
(45) Date of publication and mention of the grant of the patent: **30.12.2020**
(21) Application number: 14706814.2
(22) Date of filing: 21.02.2014
(51) Int. Cl.: H04N 7/15, H04N 7/14

(54) **VIDEO CONFERENCE VIRTUAL ENDPOINTS**
VIRTUELLE ENDPUNKTE FÜR VIDEOKONFERENZ
TERMINAUX VIRTUELS DE VIDÉO CONFÉRENCE

(30) Priority: 04.03.2013 NO 20130330; 04.03.2013 US 201361772126 P; 07.10.2013 US 201314047270
(43) Date of publication of application: 13.01.2016
(73) Proprietor: Cisco Technology, Inc., San Jose, CA 95134-1706 (US)
(72) Inventor: DAHLE, Håkon, 0473 Oslo (NO); CHAMBERLIN, Giles Russel, Warborough Oxfordshire OX10 7DB (GB); HASHIM, Hani Mustafa Elsayed Abdelkader, 0554 Oslo (NO)
(74) Representative: Mathys & Squire
(86) International application number: PCT/EP2014/053421
(87) International publication number: WO 2014/135383

(56) References cited:
- CN-B- 101 257 607
- US-A1- 2007 230 568
- US-A1- 2010 085 419
- US-A1- 2010 245 534
- US-A1- 2012 300 018

## Description

### Technical field

The present invention relates to a method, computer program and a system providing efficient large scale video conference.

### Background

Transmission of moving pictures in real-time is employed in several applications like e.g. video conferencing, net meetings and video telephony.

Video conferencing systems allow for simultaneous exchange of audio, video and data information among multiple conferencing sites. Systems known as Multipoint Control Units (MCUs) perform switching functions to allow the endpoints of multiple sites to intercommunicate in a conference. An endpoint conventionally refers to a video conference terminal, either a stand-alone terminal equipped with at least a camera, a display, a loudspeaker or a headphone and a processor or a video conferencing software client installed on a general purpose computer with the corresponding capabilities. In the following specification, this will also be referred to as a "real endpoint" to distinguish it from "virtual endpoint", whose definition will be disclosed later in the specification.

The MCU links the sites together by receiving frames of conference signals from the sites, processing the received signals, and retransmitting the processed signals to appropriate sites. The conference signals include audio, video, data and control information. In a switched conference, the video signal from one of the endpoints, typically that of the loudest speaker, is broadcasted to each of the participants. In a continuous presence conference, video signals from two or more sites are spatially mixed to form a composite video signal for viewing by conference participants. When the different video streams have been mixed together into one single video stream, the composed video stream is transmitted to the different parties of the video conference, where each transmitted video stream preferably follows a set of schemes indicating who will receive which video stream. In general, the different users prefer to receive different video streams. The continuous presence or composite image is a combined picture that may include live video streams, still images, menus or other visual images from participants in the conference. The combined picture may e.g. be composed by several equally sized pictures, or one main picture in addition to one or more smaller pictures in inset windows, commonly referred to as Picture-in-Picture (PIP). PIPs require typically a much lower resolution than the main picture due to the size difference within the screen.

A key problem with existing MCUs using the H.323 and SIP standards is the lack of scalability. In order to host large meetings one of three solutions may be used:
All endpoints call into a single large MCU in a single location. The problem of this is the excessive bandwidth consumption. As an example, if a video conference includes a large number of endpoints in both USA and Europe with the MCU residing in New York, a huge bandwidth usage across the Atlantic between the MCU and the endpoints in Europe would be required.

Another possibility is to cascade several MCUs by using H.243 or similar. The problem with this is that a broken user experience may occur. When all endpoints call into the same MCU, a participant typically views the 4-to-10 most recent speakers simultaneously. When endpoints call into two different MCUs, an endpoint can only see one of the endpoints connected to the other MCU.

There already exists non-standards based MCU dealing with problems discussed above using techniques such as SVC (Scalable Video Coding), but the investment in standards based endpoints would then be lost, and a problem with interoperability would also occur.

US 2012/300018 discloses using distributed local QoS optimization to achieve global QoS optimization for video conferencing services. US 2007/230568 discloses system and method for transcoding between scalable and non-scalable video codecs. CN 101 257 607 discloses multiple-picture processing system and method for video conference. US 2010/085419 discloses systems and methods for selecting videoconferencing endpoints for display in a composite video image.

Aspects of the invention are recited in the independent claims and preferred features are recited in the dependent claims.

### Summary

An object of embodiments herein is to overcome or at least alleviate the above mentioned disadvantage. This object and other objects are achieved by the independent claims enclosed, which define the scope of the invention.

In the following, references to "virtual endpoint" are references to a program containing instructions providing virtual endpoint functionalities.

According to a first aspect, there is provided a virtual endpoint adapted to be installed on a computer device associated with a video conference endpoint adapted to participate in a multi-party video conference. The video conference endpoint is adapted to encode and transmit an upstream media stream comprising at least video data in an upstream direction and to receive and decode a combined media stream in a downstream direction. The virtual endpoint is characterized in comprising at least one upstream decoder adapted to decode an upstream encoded media stream received from the video conference endpoint into an upstream decoded media stream, a scaling device adapted to scale the upstream decoded media stream into a scaled upstream media stream, and at least one upstream encoder adapted to encode the scaled upstream media stream into an encoded scaled upstream media stream. The virtual

endpoint is furthermore characterized in comprising a first downstream decoder adapted to decode a downstream encoded media stream of a first resolution, at least one second downstream decoder adapted to decode at least one of a number of downstream encoded media streams of a second resolution, a media composer adapted to compose a combined downstream media stream of decoded media streams of the first and the second resolution, and at least one downstream encoder adapted to encode the combined downstream media stream.

The virtual endpoint is further characterized in that it is adapted to retransmit the received upstream encoded media stream.

According to another embodiment, the virtual endpoint is characterized in that the first resolution is a High Definition (HD) resolution.

According to yet another embodiment, the virtual endpoint is characterized in that the scaling device is adapted to scale video data in the decoded media stream to the second resolution.

According to one embodiment, the virtual endpoint is characterized in that the second resolution is a Picture-in-Picture (PIP) resolution.

According to another embodiment, the virtual endpoint is characterized in that one or more other virtual endpoints respectively associated with one or more other endpoints adapted to participate in the multi-party video conference are adapted to be installed on the computer device. According to yet another embodiment, the virtual endpoint is characterized in the virtual endpoint being connected to a switching node adapted to switch the encoded scaled upstream media stream and/or the upstream encoded media stream in the upstream direction to other switching nodes involved in the multi-party video conference.

According to a further embodiment, the virtual endpoint is characterized in that the switching node is further adapted to switch the downstream encoded media stream of the first resolution and the number of downstream encoded media streams of the second resolution to one or more virtual endpoints associated with the other switching nodes.

According to a second aspect, there is provided a method in a virtual endpoint installed on a computer device associated with a video conference endpoint participating in a multi-party video conference. The video conference endpoint is encoding and transmitting an upstream media stream comprising at least video data in an upstream direction and receiving and decoding a combined downstream media stream in a downstream direction. The method is characterized in comprising the steps of decoding an upstream encoded media stream received from the video conference endpoint into an upstream decoded media stream, scaling the upstream decoded media stream into a scaled upstream media stream, encoding the scaled upstream media stream into an encoded scaled upstream media stream. The method is furthermore characterized in comprising the steps of decoding a downstream encoded media stream of a first resolution, decoding a number of downstream encoded media streams of a second resolution, composing a combined media stream of the downstream media stream of the first resolution and the number of downstream media streams of the second resolution, and encoding the combined media stream.

The method is characterized in comprising an additional step of retransmitting the received upstream encoded media stream.

According to another embodiment, the method is characterized in that the first resolution is a High Definition (HD) resolution.

According to yet another embodiment, the method is characterized in an additional step of scaling video data in the decoded media stream to the second resolution. According to a further embodiment, the method is characterized in that the second resolution is a Picture-in-Picture (PIP) resolution.

According to one embodiment, the method is characterized in that one or more other virtual endpoints respectively associated with one or more other endpoints participating in the multi-party video conference are installed on the computer device.

According to another embodiment, the method is characterized in an additional step of switching the encoded scaled upstream media stream and/or the upstream encoded media stream in the upstream direction to other switching nodes involved in the multi-party video conference.

According to a further embodiment, the method is characterized in an additional step of switching the downstream encoded media stream of the first resolution and the number of downstream encoded media streams of the second resolution to one or more virtual endpoints associated with the other switching nodes.

According to a third aspect, there is provided an endpoint system comprising at least one virtual endpoint as discussed in the foregoing. The virtual endpoint system further comprises at least one switching node adapted to switch the encoded scaled upstream media stream and/or the upstream encoded media stream in the upstream direction to other switching nodes involved in the multi-party video conference.

### Brief description of the drawings

Figure 1 is an illustration of an exemplifying virtual endpoint according to embodiments of the disclosure,
Figure 2 is an illustration of an exemplifying MCU consisting of a number of virtual endpoints and a switching node according to embodiments of the disclosure,
Figure 3 is an illustration of an exemplifying MCU connected to a variety of different types of endpoints according to embodiments of the disclosure,
Figure 4 illustrates an exemplifying distributed MCU comprising duplets of one switching node and two virtual endpoints according to embodiments of the disclosure,
Figure 5 illustrates in an exemplifying manner how a backplane only requires to carry one high resolution stream in addition to a number of low resolution streams according to one of the embodiments herein,
Figure 6 shows in an exemplifying manner how media streams across a backplane simply can be copied and forwarded across the backplane in accordance with embodiments of the disclosure, and
Figure 7 illustrates in an exemplifying manner how media data across the backplane can be encoded to provide an efficient format between the switching nodes in accordance with embodiments of the disclosure.

### Detailed description of an example embodiment

According to embodiments herein, a virtual endpoint is introduced overcoming the above discussed problems. One virtual endpoint is dedicated to serve one particular real endpoint, and the virtual endpoint is typically installed on a server in the same local network as the associated real endpoint, where an MCU or a fraction of a distributed MCU also is installed.

In the upstream direction, the virtual endpoint includes at least an upstream decoder, a scaling unit and an upstream encoder. In the downstream direction, the virtual endpoint includes at least a number of decoders, a composing unit and a downstream encoder.

The real endpoint transmits coded data to its dedicated virtual endpoint which is being decoded by the upstream decoder. The decoded data is being available for the scaling unit, which in turn is being downscaled to a predefined or requested resolution. The downscaled data is then encoded by the upstream encoder, and transmitted further as a downscaled stream, e.g. to one or more stream switching nodes. In addition, the received coded data from the real endpoint is forwarded through the virtual endpoint as a non-downscaled stream to the one or more media nodes.

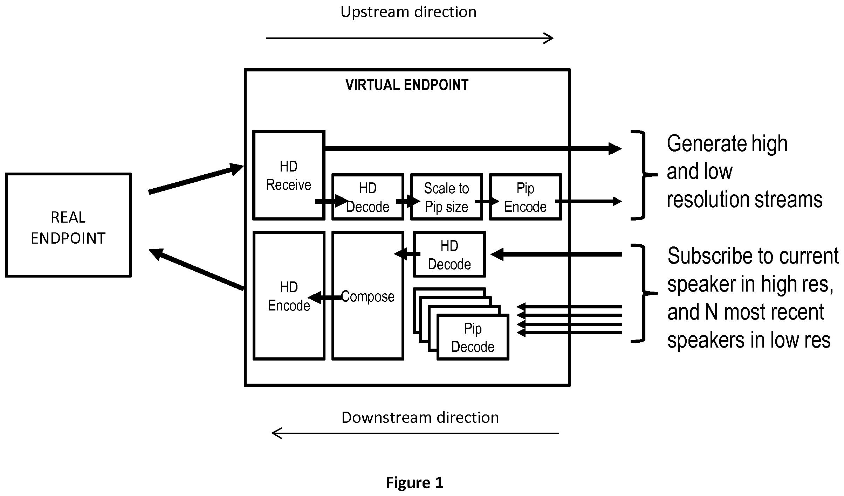

A schematic illustration of an example of a virtual endpoint as discussed above is shown in **figure 1****.** Here, the task of the virtual endpoint in the upstream direction is to create and transmit two streams of the encoded data received from its associated real endpoint, one of high resolution, and one of low resolution. In the downstream direction, the task of the virtual endpoint is to decode one encoded HD (High Definition) data stream and a number of encoded PIPs (Picture In Picture) subscribed from one or more stream switching nodes, to compose a continuous presence picture from the encoded HD data stream and the number of PIPs, and then further to encode the whole continuous presence picture which is transmitted back to the associated real endpoint.

In the example above, only one downscaled stream of the encoded data received from an associated real endpoint is transmitted to the switching node. However, the scaling unit should be adjusted to downscale streams of a number of different resolutions at request. For example, a resolution according to a quadrant of picture is quite common in a continuous presence view.

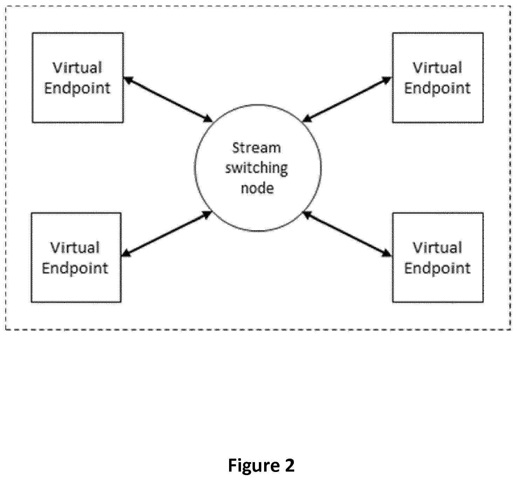

A single MCU may be implemented as software on a physical off-the-shelf server/computer, consisting of a number of virtual endpoints plus a switching core, as shown in **figure 2****.** Alternatively the components inside the dotted line may be deployed natively on a server. In the following, a virtualized instance is described under the understanding that non-virtualized deployments are also possible.

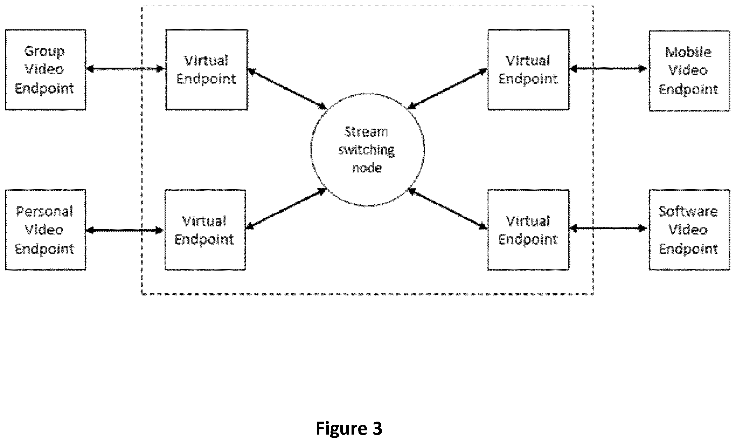

As indicated in **figure 3****,** the virtual endpoints inside the MCU are connected to the associated real endpoints which may be a variety of different types of endpoints like group video endpoints, personal video endpoints, mobile video endpoints and software video endpoints, as shown in figure 3.

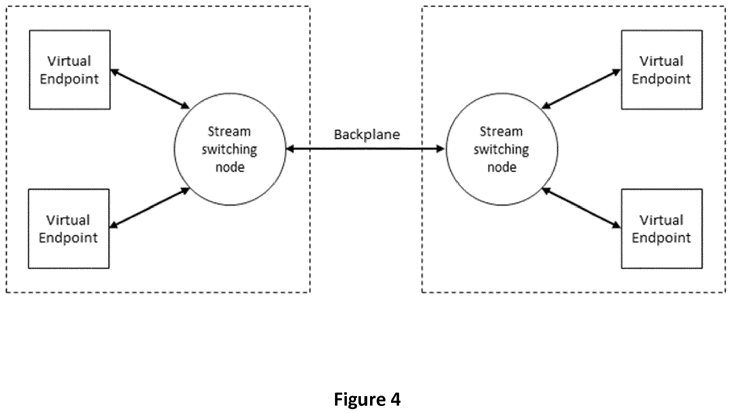

As illustrated in **figure 4****,** multiple stream switching nodes associated with a number of virtual endpoints framed by dotted lines may be connected in a distributed fashion by a backplane, which connects multiple stream switching nodes in a tree and/or mesh topology. The multiple stream switching nodes and the associated virtual endpoints can either be deployed on the same host (physical server), or on different hosts for geographical distribution.

According to embodiments herein, the virtual endpoint shields the internal logic in the MCU from the real endpoint. The real endpoint could be any standards based SIP, H.323, HTML5 endpoint, using any number of voice and video codecs.

As earlier indicated, the virtual endpoint might subscribe to receive, from the switching core, a number of video streams:
- The current speaker in high resolution
- The most recent arbitrary number of speakers, for instance 4-9 speakers, as low resolution streams

The exception to this rule is that the participant who is the current speaker is likely to want to receive the previous speaker in high resolution, since it is likely that no participant will want to view himself in full screen view.

The virtual endpoint will then decode these streams, scale and compose it into a nice continuous presence layout, and encode the resulting image into a video stream appropriate for the real endpoint it is connected to.

An optional stream switching node may make all its streams available also over the backplane. Hence, in a distributed system, another stream switching node can request to receive any number of streams. This means that the user experience for all endpoints might be identical, e.g. current speaker in full screen plus a number of recent speakers in small thumbnail views. The fact that multiple streams may be transmitted between stream switching nodes is a major difference from the way existing MCUs are cascaded using mechanisms like H.243 (these old ways of doing cascading only provide a single bidirectional video stream between the MCUs).

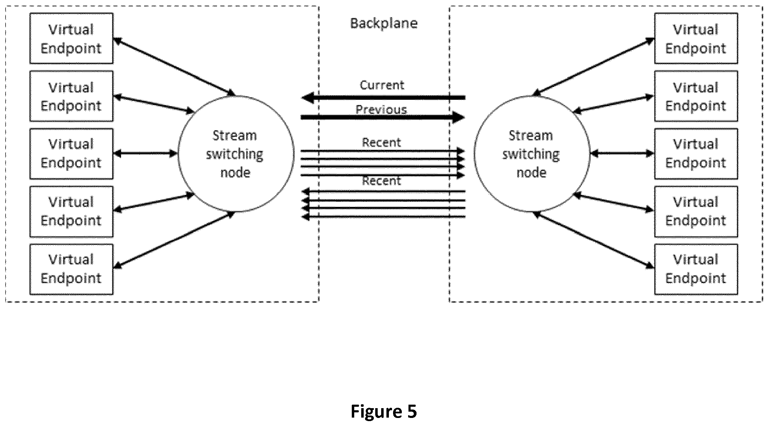

Since multiple streams are transmitted over the backplane, bandwidth usage is a concern. However, only the streams representing current and previous speakers are transmitted at full resolution. The other participants may be scaled down to between 1/25th and 1/100th of a full screen view. In a distributed conference, this means that that the backplane never needs to carry more than one high resolution stream plus e.g. nine low resolution streams. If the bandwidth of the low resolution stream is 1-5% of the bandwidth of the full resolution stream, it means that the total bandwidth used across the backplane between two nodes will typically be between 1 and 1.5 times the bandwidth of a single stream. An illustration of this is shown in **figure 5****.**

The embodiments herein provide significant savings over traditional non-distributed MCU conferences. As an example, consider the use case of a global company all-hands meeting with e.g. 100 participants in the US and 100 participants in Europe. In a traditional MCU deployment, all 200 participants would call into a single MCU. This would require 100 full resolution streams across the Atlantic. According to some of the embodiments herein, only a single full-resolution stream would be transmitted across the Atlantic, plus up to e.g. 9 smaller "thumbnails" of recent speakers. If each thumbnail is 1/100th of a full resolution stream, it means that rather than sending 100 streams we are sending 1.09 streams.

From an end-user point of view, the number or URI (Uniformed Resource Identifier) to dial in order to join a particular conference is the same regardless of which location the end-user is located. The endpoint will connect to its closest switching node based on either configured location or automatic location assignment based on any number of well-known methods.

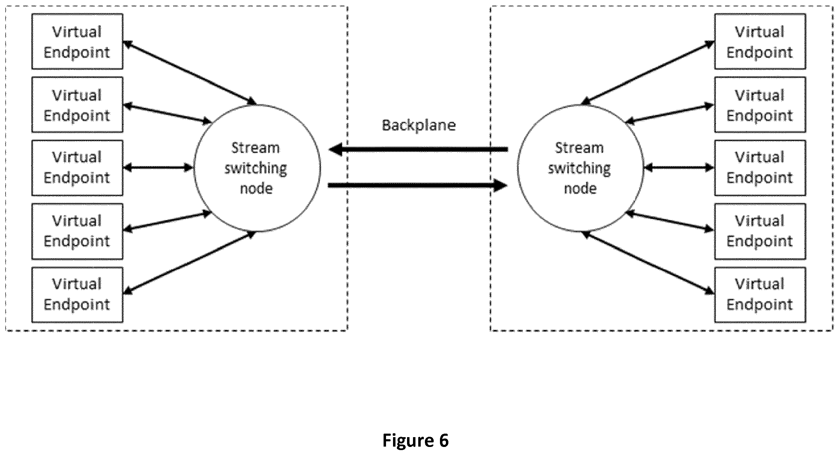

In a distributed conference, media data will pass through one or more switching nodes. In the ideal case, the network connection between switching nodes is perfect, with no packet loss. In this case, the media streams across the backplane can simply be copied and forwarded across the backplane as illustrated in **figure 6****.**

However, in the case of packet loss or other network problems in the network, some robustness/resilience may preferably be added. According to embodiments herein, there are two methods. The first one is to re-encode the media that is transmitted over the backplane, and the second one is to protect the media stream by adding error correction to the media stream. A combination is of course also possible - re-encode the media into a more resilient format (e.g. using hierarchical encoding methods such as those that exist in H.264) and additionally add error correction.

Re-encoding the media may possibly add latency in the order of e.g. 10-100ms to the media stream. Adding error correction may add overhead and may require increased bandwidth. In some cases, such as when multiple stream switching nodes are located in the same data-center, the network can be engineered such that packet loss is avoided. Hence the embodiments as described herein may be scaled up without adding latency.

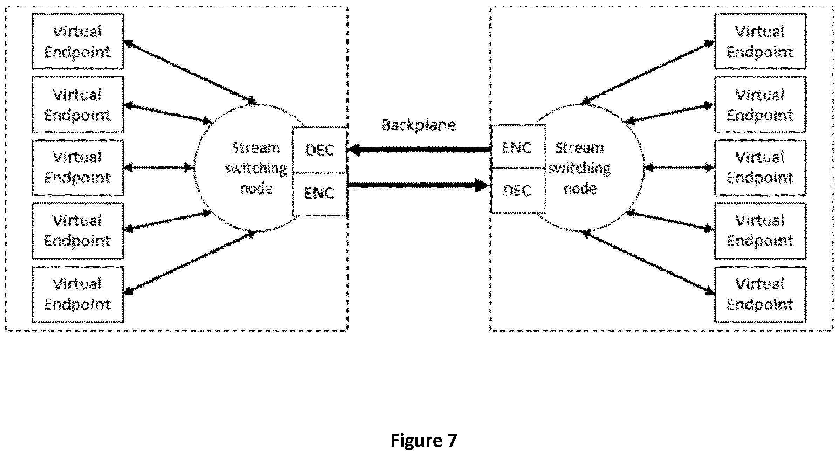

In order to reduce bandwidth between the switching nodes, the media data across the backplane can be encoded into a more efficient format. As an example, if the endpoints participating in a conference use H.263 and/or H.264, a more bandwidth efficient codec such as ITU-T H.265/HEVC can be used across the backplane, in order to save 20-50% bandwidth. This is illustrated in **figure 7** with a decoder (dec) and encoder (enc) on each switching towards the backplane interface.

## Claims

1. A program comprising instructions which, when executed by a computer device associated with a video conference endpoint participating in a multi-party video conference, provides virtual endpoint functionalities, the virtual endpoint functionalities being dedicated to the video conference endpoint,
**characterized in that** the virtual endpoint functionalities comprise:
receiving, in an upstream direction, an upstream encoded media stream comprising at least video data from the video conference endpoint,
decoding the upstream encoded media stream received from the video conference endpoint into an upstream decoded media stream,
scaling the upstream decoded media stream into a scaled upstream media stream,
encoding the scaled upstream media stream into an encoded scaled upstream media stream,
transmitting further the encoded scaled upstream media stream and retransmitting the received upstream encoded media stream to one or more switching nodes involved in the multi-party video conference,
receiving, in a downstream direction, a downstream encoded media stream of a first resolution and a number of downstream encoded media streams of a second resolution from one or more switching nodes involved in the multi-party video conference,
decoding the downstream encoded media stream of the first resolution,
decoding at least one of the number of downstream encoded media streams of the second resolution,
composing a combined downstream media stream with the decoded media streams of the first resolution and the second resolution,
encoding the combined downstream media stream, and
transmitting the encoded combined downstream media stream to the video conference endpoint.

2. The program according to Claim 1, wherein the first resolution is a High Definition, HD, resolution.

3. The program according to Claim 1 or 2, wherein the scaling scales video data in the decoded media stream to the second resolution.

4. The program according to one of Claims 1 to 3, wherein the second resolution is a Picture-in-Picture, PIP, resolution.

5. A computer device associated with one ore more video conference endpoints adapted to participate in a multi-party video conference, wherein one or more instances of the program according to any one of the previous claims are installed.

6. A system comprising:
a switching node adapted to switch an encoded scaled upstream media stream and/or an upstream encoded media stream, in an upstream direction, to other switching nodes involved in a multi-party video conference; and
the computer device according to Claim 5, said computer device being connected to the switching node.

7. A system according to Claim 6, wherein the switching node connected to the computer device is further adapted to switch the downstream encoded media stream of the first resolution and the number of downstream encoded media streams of the second resolution to one or more virtual endpoints associated with said other switching nodes.

8. A method for providing virtual endpoint functionalities on a computer device associated with a video conference endpoint participating in a multi-party video conference, the virtual endpoint functionalities being dedicated to the video conference endpoint,
the method being **characterized by**:
receiving, in an upstream direction, an upstream encoded media stream comprising at least video data from the video conference endpoint,
decoding the upstream encoded media stream received from the video conference endpoint into an upstream decoded media stream,
scaling the upstream decoded media stream into a scaled upstream media stream,
encoding the scaled upstream media stream into an encoded scaled upstream media stream,
transmitting further the encoded scaled upstream media stream and retransmitting the received upstream encoded media stream to one or more switching nodes involved in the multi-party video conference,
receiving, in a downstream direction, a downstream encoded media stream of a first resolution and a number of downstream encoded media streams of a second resolution from one or more switching nodes involved in the multi-party video conference,
decoding the downstream encoded media stream of the first resolution,
decoding a number of the downstream encoded media streams of the second resolution,
composing a combined media stream with the downstream media stream of the first resolution and the number of downstream media streams of the second resolution,
encoding the combined downstream media stream, and
transmitting the encoded combined downstream media stream to the video conference endpoint.

9. The method according to Claim 8, **characterized in that** the first resolution is a High Definition, HD, resolution.

10. The method according to Claim 8 or 9, including an additional step of:
scaling video data in the decoded media stream to the second resolution, optionally wherein the second resolution is a Picture-in-Picture, PIP, resolution.

## Patentansprüche

1. Programm, das Befehle umfasst, die bei Ausführung durch ein Computergerät, das mit einem Videokonferenz-Endpunkt verbunden ist, der an einer Mehrparteien-Videokonferenz teilnimmt, virtuelle Endpunktfunktionalitäten bieten, wobei die virtuellen Endpunktfunktionalitäten für den Videokonferenz-Endpunkt dediziert sind,
**dadurch gekennzeichnet, dass** die virtuellen Endpunktfunktionalitäten Folgendes beinhalten:
Empfangen, in einer stromaufwärtigen Richtung, eines stromaufwärtigen encodierten Medienstroms, der mindestens Videodaten vom Videokonferenz-Endpunkt umfasst,
Decodieren des vom Videokonferenz-Endpunkt empfangenen stromaufwärtigen encodierten Medienstroms in einen stromaufwärtigen decodierten Medienstrom,
Skalieren des stromaufwärtigen decodierten Medienstroms in einen skalierten stromaufwärtigen Medienstrom,
Encodieren des skalierten stromaufwärtigen Medienstroms in einen encodierten skalierten stromaufwärtigen Medienstrom,
Weitersenden des codierten skalierten stromaufwärtigen Medienstroms und erneutes Senden des empfangenen stromaufwärtigen encodierten Medienstroms an einen oder mehrere Vermittlungsknoten, die an der Mehrparteien-Videokonferenz beteiligt sind,
Empfangen, in einer stromabwärtigen Richtung, eines stromabwärtigen encodierten Medienstroms mit einer ersten Auflösung und einer Anzahl von stromabwärtigen encodierten Medienströmen mit einer zweiten Auflösung von einem oder mehreren Vermittlungsknoten, die an der Mehrparteien-Videokonferenz beteiligt sind,
Decodieren des stromabwärtigen encodierten Medienstroms mit der ersten Auflösung,
Decodieren von mindestens einem aus der Anzahl von stromabwärtigen encodierten Medienströme mit der zweiten Auflösung,
Zusammensetzen eines kombinierten stromabwärtigen Medienstroms mit den decodierten Medienströmen mit der ersten Auflösung und der zweiten Auflösung,
Encodieren des kombinierten stromabwärtigen Medienstroms, und
Senden des codierten kombinierten stromabwärtigen Medienstroms zum Videokonferenz-Endpunkt.

2. Programm nach Anspruch 1, wobei die erste Auflösung eine HD-(High Definition)-Auflösung ist.

3. Programm nach Anspruch 1 oder 2, wobei die Skalierung Videodaten im decodierten Medienstrom auf die zweite Auflösung skaliert.

4. Programm nach einem der Ansprüche 1 bis 3, wobei die zweite Auflösung eine Bild-im-Bild-(PIP)-Auflösung ist.

5. Computergerät, das mit einem oder mehreren Videokonferenz-Endpunkten assoziiert ist, die zur Teilnahme an einer Mehrparteien-Videokonferenz ausgelegt sind, wobei eine oder mehrere Instanzen des Programms nach einem der vorherigen Ansprüche installiert sind.

6. System, das Folgendes umfasst:
einen Vermittlungsknoten, ausgelegt zum Schalten eines encodierten skalierten stromaufwärtigen Medienstroms und/oder eines stromaufwärtigen encodierten Medienstroms in einer stromaufwärtigen Richtung zu anderen an einer Mehrpartien-Videokonferenz beteiligten Vermittlungsknoten; und
das Computergerät nach Anspruch 5, wobei das genannte Computergerät mit dem Vermittlungsknoten verbunden ist.

7. System nach Anspruch 6, wobei der mit dem Computergerät verbundene Vermittlungsknoten ferner zum Schalten des stromabwärtigen encodierten Medienstroms mit der ersten Auflösung und der Anzahl von stromabwärtigen encodierten Medienströme mit der zweiten Auflösung zu einem oder mehreren virtuellen Endpunkten ausgelegt ist, die mit den genannten anderen Vermittlungsknoten assoziiert sind.

8. Verfahren zum Bereitstellen virtueller Endpunktfunktionalitäten auf einem Computergerät, das mit einem Videokonferenz-Endpunkt assoziiert ist, der an einer Mehrparteien-Videokonferenz teilnimmt, wobei die virtuellen Endpunktfunktionalitäten für den Videokonferenz-Endpunkt dediziert sind,
wobei das Verfahren **gekennzeichnet ist durch**:
Empfangen, in einer stromaufwärtigen Richtung, eines stromaufwärtigen encodierten Medienstroms, der mindestens Videodaten vom Videokonferenz-Endpunkt umfasst,
Decodieren des vom Videokonferenz-Endpunkt empfangenen stromaufwärtigen encodierten Medienstroms in einen stromaufwärtigen decodierten Medienstrom,
Skalieren des stromaufwärtigen decodierten Medienstroms in einen skalierten stromaufwärtigen Medienstrom,
Encodieren des skalierten stromaufwärtigen Medienstroms in einen encodierten skalierten stromaufwärtigen Medienstrom,
Weitersenden des encodierten skalierten stromaufwärtigen Medienstroms und erneutes Senden des empfangenen stromaufwärtigen enccodierten Medienstroms an einen oder mehrere Vermittlungsknoten, die an der Mehrparteien-Videokonferenz beteiligt sind,
Empfangen, in einer stromabwärtigen Richtung, eines stromabwärtigen encodierten Medienstroms mit einer ersten Auflösung und einer Anzahl von stromabwärtigen encodierten Medienströmen mit einer zweiten Auflösung von einem oder mehreren Vermittlungsknoten, die an der Mehrparteien-Videokonferenz beteiligt sind,
Decodieren des stromabwärtigen encodierten Medienstroms mit der ersten Auflösung,
Decodieren einer Reihe der stromabwärtigen encodierten Medienströme mit der zweiten Auflösung,
Zusammensetzen eines kombinierten Medienstroms mit dem stromabwärtigen Medienstrom mit der ersten Auflösung und der Anzahl von stromabwärtigen Medienströme mit der zweiten Auflösung,
Encodieren des kombinierten stromabwärtigen Medienstroms, und
Senden des encodierten kombinierten stromabwärtigen Medienstroms an den Videokonferenz-Endpunkt.

9. Verfahren nach Anspruch 8, **dadurch gekennzeichnet, dass** die erste Auflösung eine HD-(High Definition)-Auflösung ist.

10. Verfahren nach Anspruch 8 oder 9, einschließlich eines zusätzlichen Schrittes des:
Skalierens von Videodaten in dem decodierten Medienstrom auf die zweite Auflösung, wobei optional die zweite Auflösung eine Bild-im-Bild-(PIP)-Auflösung ist.

## Revendications

1. Programme comprenant des instructions qui, à leur exécution par un dispositif informatique associé à un terminal de visioconférence participant à une visioconférence multi-parties, fournit des fonctionnalités de terminal virtuel, les fonctionnalités de terminal virtuel étant dédiées au terminal de conférence vidéo,
**caractérisé en ce que** les fonctionnalités de terminal virtuel comprennent :
la réception, dans un sens amont, d'un flux multimédia codé amont comprenant au moins des données vidéo à partir du terminal de visioconférence,
le décodage du flux multimédia codé amont reçu à partir du terminal de visioconférence en un flux multimédia décodé amont,
la mise à l'échelle du flux multimédia décodé amont en un flux multimédia amont dimensionné,
le codage du flux multimédia amont dimensionné en un flux multimédia amont dimensionné codé,
la transmission en outre du flux multimédia amont dimensionné code et la retransmission du flux multimédia codé amont reçu à un ou plusieurs nœuds de commutation impliqués dans la visioconférence multi-parties,
la réception, dans un sens aval, d'un flux multimédia codé aval d'une première résolution et d'un nombre de flux multimédia codés aval d'une seconde résolution à partir d'un ou plusieurs nœuds de commutation impliqués dans la visioconférence multi-parties,
le décodage du flux multimédia codé aval de la première résolution,
le décodage d'au moins un du nombre de flux multimédia codés aval de la seconde résolution,
la composition d'un flux multimédia aval combiné avec les flux multimédia décodés de la première résolution et de la seconde résolution,
le codage du flux multimédia aval combiné,
et la transmission du flux multimédia aval combiné codé au terminal de visioconférence.

2. Programme selon la revendication 1, dans lequel la première résolution est une résolution de haute définition, HD.

3. Programme selon la revendication 1 ou 2, dans lequel la mise à l'échelle dimensionne les données vidéo dans le flux multimédia décodé dans la seconde résolution.

4. Programme selon l'une quelconque des revendications 1 à 3, dans lequel la seconde résolution est une résolution d'image dans l'image, PIP.

5. Dispositif informatique associé à un ou plusieurs terminaux de visioconférence conçus pour participer à une visioconférence multi-parties, dans lequel une ou plusieurs instances du programme selon l'une quelconque des revendications précédentes sont installées.

6. Système comprenant :
un nœud de commutation conçu pour commuter un flux multimédia amont dimensionné codé et/ou un flux multimédia codé amont, dans un sens amont, sur d'autres nœuds de commutation impliqués dans une visioconférence multi-parties ; et
le dispositif informatique selon la revendication 5, ledit dispositif informatique étant connecté au nœud de commutation.

7. Système selon la revendication 6, dans lequel le nœud de commutation connecté au dispositif informatique est conçu en outre pour commuter le flux multimédia codé aval de la première résolution et le nombre de flux multimédia codés aval de la seconde résolution sur un ou plusieurs terminaux virtuels associés auxdits autres nœuds de commutation.

8. Procédé de fourniture de fonctionnalités de terminal virtuel sur un dispositif informatique associé à un terminal de visioconférence participant à une visioconférence multi-parties, les fonctionnalités de terminal virtuel étant dédiées au terminal de visioconférence,
le procédé étant **caractérisé par** :
la réception, dans un sens amont, d'un flux multimédia codé amont comprenant au moins des données vidéo à partir du terminal de visioconférence,
le décodage du flux multimédia codé amont reçu à partir du terminal de visioconférence en un flux multimédia décodé amont,
la mise à l'échelle du flux multimédia décodé amont en un flux multimédia amont dimensionné,
le codage du flux multimédia amont dimensionné en un flux multimédia amont dimensionné codé,
la transmission en outre du flux multimédia amont dimensionné codé et la retransmission du flux multimédia codé amont reçu à un ou plusieurs nœuds de commutation impliqués dans la visioconférence multi-parties,
la réception, dans un sens aval, d'un flux multimédia codé aval d'une première résolution et d'un nombre de flux multimédia codés aval d'une seconde résolution à partir d'un ou plusieurs nœuds de commutation impliqués dans la visioconférence multi-parties,
le décodage du flux multimédia codé aval de la première résolution,
le décodage d'un nombre de flux multimédia codés aval de la seconde résolution,
la composition d'un flux multimédia aval combiné avec le flux multimédia aval de la première résolution et le nombre de flux multimédia aval de la seconde résolution,
le codage du flux multimédia aval combiné, et
la transmission du flux multimédia aval combiné codé au terminal de visioconférence.

9. Procédé selon la revendication 8, **caractérisé en ce que** la première résolution est une résolution de haute définition, HD.

10. Procédé selon la revendication 8 ou 9, comportant une étape supplémentaire de :
mise à l'échelle de données vidéo dans le flux multimédia décodé dans la seconde résolution, facultativement, dans lequel la seconde résolution est une résolution d'image dans l'image, PIP.
